# EUROPEAN PATENT APPLICATION

(11) **EP 4 764 804 A1**
(43) Date of publication of application: **24.06.2026**
(21) Application number: 24855786.0
(22) Date of filing: 19.08.2024
(51) Int. Cl.: G06F 3/04845, G06F 3/04817, G06T 3/04, G06T 11/60

(54) **IMAGE GENERATION METHOD AND RELATED DEVICE**

(30) Priority: 18.08.2023 CN 202311049768
(71) Applicant: Beijing Zitiao Network Technology Co., Ltd., Beijing 100190 (CN)
(72) Inventor: CHEN, Tianqi, Beijing 100028 (CN); HAN, Xuyue, Beijing 100028 (CN); ZHU, Yixuan, Beijing 100028 (CN); ZENG, Xiangrui, Beijing 100028 (CN); HU, Lingxin, Beijing 100028 (CN); LI, Zexiong, Beijing 100028 (CN); LIN, Junhai, Beijing 100028 (CN); YANG, Xiaoying, Beijing 100028 (CN)
(74) Representative: Grünecker Patent- und Rechtsanwälte PartG mbB
(86) International application number: PCT/CN2024/113203
(87) International publication number: WO 2025/040063

(57) **Abstract**

The disclosure provides a method for image generation and a related device. The method includes: displaying a text editing region and an image effect setting control in an image display interface; determining, in response to editing the text content in the text editing region, a target prompt based on the text content; determining, in response to the operation on the image effect setting control, at least one target parameter; and displaying the generated target image in a first display region of the image display interface based on the target prompt and the target parameter.

## Description

This application claims the benefit of Chinese Patent Application No. 202311049768.3, filed on Aug 18, 2023, entitled "METHOD FOR IMAGE GENERATION AND RELATED DEVICE," the entire content of which is incorporated herein by reference.

### FIELD

The present disclosure relates to the field of computer technologies, and in particular, to a method for image generation and a related device.

### BACKGROUND

With the wide application of artificial intelligence technology in the field of images, the text description can be converted into an image and displayed, which has the advantages of high degree of automation, high precision, high scalability, customizability and the like. However, in existing technology, the image result generated based on the text often needs to jump from the text input interface to another interface for, and the user has to return to the text input interface when the text needs to be modified. This makes the user jump back and forth between different interfaces, resulting in inconvenient operation and low efficiency of image generation. In addition, the generated image result only depends on the input text, and the display effect of the image cannot be adjusted, resulting in the setting of the image generated based on text not flexible enough to meet the user's requirement for flexible adjustment of the image generation effect.

### SUMMARY

The present disclosure provides a method, apparatus, device, storage medium and program product for image generation, to solve the technical problems of inflexible settings, inconvenient operation and low efficiency in image generation to a certain extent.

According to a first aspect of the present disclosure, there is provided a method for image generation, comprising: displaying a text editing region and an image effect setting control in an image display interface; determining, in response to editing text content in the text editing region, a target prompt based on the text content; determining at least one target parameter in response to an operation on the image effect setting control; displaying, based on the target prompt and the target parameter, a generated target image in a first display region of the image display interface.

According to a second aspect of the present disclosure, there is provided an apparatus for image display, comprising: a display module configured to display a text editing region and an image effect setting control in an image display interface; a setting module configured to determine, in response to editing text content in the text editing region, a target prompt based on the text content; and determine at least one target parameter in response to an operation on the image effect setting control; wherein the display module is further configured to display, based on the target prompt and the target parameter, a generated target image in a first display region of the image display interface.

According to a third aspect of the present disclosure, there is provided an electronic device, comprising one or more processors, a memory, and one or more programs, where the one or more programs are stored in the memory and executed by the one or more processor, and the programs comprise instructions for performing the method according to the first aspect or the second aspect.

According to a fourth aspect of the present disclosure, there is provided a non-transitory computer-readable storage medium comprising a computer program, where the computer program, when executed by one or more processors, the processor is enabled to perform the method according to the first aspect or the second aspect.

According to a fifth aspect of the present disclosure, there is provided a computer program product, comprising computer program instructions, where the computer program instructions, when run on a computer, cause the computer is enabled to perform the method according to the first aspect.

### BRIEF DESCRIPTION OF DRAWINGS

In order to more clearly illustrate the technical solutions in the present disclosure or related technologies, the accompanying drawings, which need to be used in the description of the embodiments or related technologies, are briefly introduced below, and obviously, the drawings in the following description are merely embodiments of the present disclosure, and for those of ordinary skill in the art, other drawings may be obtained according to these drawings without creative work.
FIG. 1 is a schematic diagram of an image generation architecture according to embodiments of the present disclosure.
FIG. 2 is a schematic diagram of a hardware structure of an example electronic device according to embodiments of the present disclosure.
FIG. 3 is a schematic flowchart of a method for image generation according to embodiments of the present disclosure.
FIGS. 4-5 are schematic diagrams of an image display interface according to embodiments of the present disclosure.
FIG. 6 is a schematic diagram of an image effect setting interface according to embodiments of the present disclosure.
FIG. 7 is a schematic diagram of an image display interface according to embodiments of the present disclosure.
FIGS. 8-9 are schematic diagrams of a first display region according to embodiments of the present disclosure.
FIG. 10 is a schematic diagram of an image display interface according to embodiments of the present disclosure.
FIG. 11 is a schematic diagram of a super-resolution image according to embodiments of the present disclosure.
FIG. 12 is a schematic diagram of a work set interface according to embodiments of the present disclosure.
FIG. 13 is a schematic diagram of an image information interface according to embodiments of the present disclosure.
FIG. 14 is a schematic diagram of a historical image according to embodiments of the present disclosure.
FIGS. 15-16 are schematic diagrams of presentation images according to embodiments of the present disclosure.
FIG. 17 is a schematic diagram of an apparatus for image generation according to embodiments of the present disclosure.

### DETAILED DESCRIPTION

In order to make the objectives, technical solutions and advantages of the present disclosure clearer, the present disclosure will be further described in detail below with reference to the accompanying drawings.

It should be noted that, unless otherwise defined, technical terms or scientific terms used in the embodiments of the present disclosure should be of ordinary meanings understood by those skilled in the art to which the present disclosure belongs. The terms "first", "second" and similar terms used in the embodiments of the present disclosure do not represent any order, quantity, or importance, but are merely used to distinguish different components. A word "comprising" or "comprise" or the like means that an element or object appearing in front of the word encompasses elements or objects appearing behind the word and equivalents thereof, without excluding other elements or objects. Similar terms such as "connected" or "combined" are not limited to physical or mechanical connections, but may include electrical connections, whether direct or indirect. "Upper", "lower", "left", "right" and the like are only used to represent relative position relationships, and when the absolute position of the object to be described changes, the relative position relationships may also change accordingly.

It may be understood that, before the technical solutions disclosed in the embodiments of the present disclosure are used, the types, the usage scope, the usage scenario and the like of personal information related to the present disclosure should be notified to the user in an appropriate manner according to the relevant laws and regulations, and the authorization of the user should be obtained.

For example, prompt information is sent to the user to explicitly prompt the user that the requested operation will need to acquire and use personal information of the user in response to receiving an active request of a user. Therefore, the user may autonomously select whether to provide the personal information to the software or hardware (such as, electronic device, application program, server, or storage medium) for executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and the process to obtain the authorization of the user is merely illustrative, and does not constitute a limitation on implementations of the present disclosure, and other manners meeting related laws and regulations may also be applied to implementations of the present disclosure.

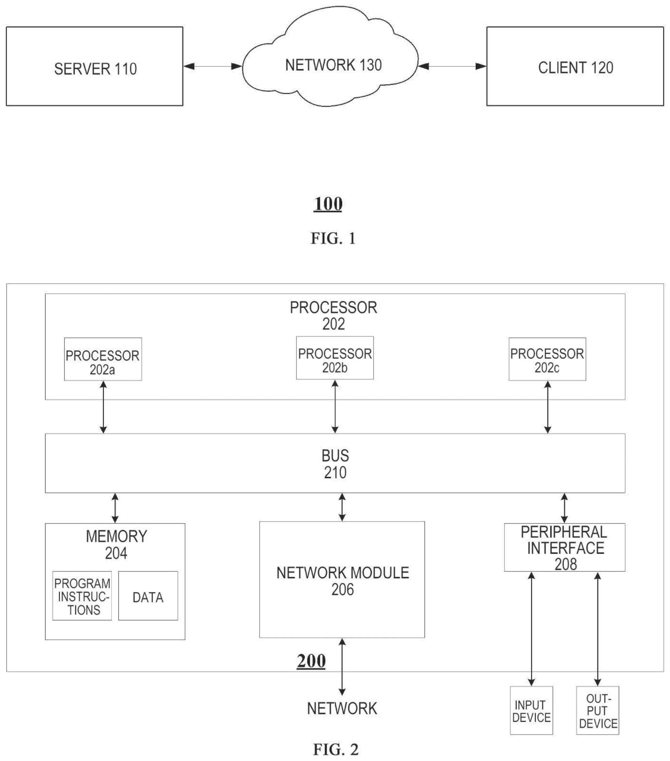

FIG. 1 is a schematic diagram of an image generation according to embodiments of the present disclosure. Referring to FIG. 1, the image generation architecture 100 may include a server 110, a terminal 120, and a network 130 providing a communication link. The server 110 and the terminal 120 may be connected by a wired or wireless network 130. The server 110 may be a standalone physical server, a server cluster including multiple physical servers or a distributed system, or may be a cloud server that provides basic cloud computing services such as cloud services, cloud databases, cloud computing, cloud functions, cloud storage, network services, cloud communications, middleware services, security services, and CDNs.

The terminal 120 may be implemented by hardware or software. For example, when the terminal 120 is implemented by hardware, it may be various electronic devices having display screens and supporting interface display, including but not limited to a smart phone, a tablet computer, an e-book reader, a laptop portable computer, and a desktop computer. When the terminal 120 device is implemented by software, it may be installed in the electronic device listed above. It may be implemented as a plurality of software programs or software modules (for example, software or software modules for providing distributed services), or may be implemented as a single software or software module, which is not specifically limited herein.

It should be noted that the method for image generation provided in this embodiment of this application may be performed by the terminal 120, or may be performed by the server 110. It should be appreciated that the numbers of terminals, networks, and servers in FIG. 1 are merely illustrative and are not intended to be limiting. Any number of terminals, networks, and servers may be provided according to the implementation needs.

FIG. 2 is a schematic diagram of a hardware structure of an example electronic device 200 according to an embodiment of the present disclosure. As shown in FIG. 2, the electronic device 200 may include a processor 202, a memory 204, a network module 206, a peripheral interface 208, and a bus 210. The processor 202, the memory 204, the network module 206, and the peripheral interface 208 implement a communication connection with each other inside the electronic device 200 through the bus 210.

The processor 202 may be a central processing unit (CPU), an image generator, a neural network processor (NPU), a microcontroller (MCU), a programmable logic device, a digital signal processor (DSP), an application specific integrated circuit (ASIC), or one or more integrated circuits. The processor 202 may be used to perform functions related to the techniques described in this disclosure. In some embodiments, the processor 202 may also include multiple processors integrated as a single logical component. For example, as shown in FIG. 2, the processor 202 may include a plurality of processors 202a, 202b, and 202c.

The memory 204 may be configured to store data (e.g., instructions, computer code, etc.). As shown in FIG. 2, the data stored in the memory 204 may include program instructions (for example, program instructions for implementing the method for image generation in the embodiments of the present disclosure) and data to be processed (for example, the memory may store configuration files of other modules, etc.). The processor 202 may also access program instructions and data stored in the memory 204, and execute program instructions to operate the data to be processed. The memory 204 may include volatile or non-volatile storage apparatus. In some embodiments, the memory 204 may include a random access memory (RAM), a read-only memory (ROM), an optical disk, a magnetic disk, a hard disk, a solid state disk (SSD), a flash memory, a storage stick, or the like.

The network module 206 may be configured to provide communication with other external devices to the electronic device 200 via the network. The network may be any wired or wireless network capable of transmitting and receiving data. For example, the network may be a wired network, a local wireless network (e.g., Bluetooth, WiFi, near field communication (NFC), etc.), a cellular network, the Internet, or a combination thereof. It may be understood that the type of the network is not limited to the foregoing specific examples. In some embodiments, the network module 306 may include any combination of any number of network interface controllers (NICs), radio frequency modules, access transceivers, modems, routers, gateways, adapters, cellular network chips, and the like.

Peripheral interface 208 may be configured to connect electronic device 200 with one or more peripheral apparatus to enable information input and output. For example, the peripheral apparatus may include an input device such as a keyboard, a mouse, a touchpad, a touch screen, a microphone, various sensors, and an output device such as a display, a speaker, a vibrator, and an indicator light.

The bus 210 may be configured to transfer information, such as an internal bus (e.g., a processor-memory bus), an external bus (USB port, PCI-E bus), etc., between various components of the electronic device 200, such as the processor 202, the memory 204, the network module 206, and the peripheral interface 208.

It should be noted that although the architecture of the electronic device 200 only shows the processor 202, the memory 204, the network module 206, the peripheral interface 208, and the bus 210, in a specific implementation process, the architecture of the electronic device 200 may further include other components necessary for implementing normal operation. In addition, those skilled in the art may understand that the architecture of the electronic device 200 may include only components necessary for implementing the solutions of the embodiments of the present disclosure, and not necessarily include all components shown in the figure.

At present, after the image result is generated based on the text, usually, it needs to jump from the text input interface to another interface to display the generated image result, and the user needs to return to the text input interface when the input text needs to be modified. Therefore, the user jumps back and forth between different interfaces. The operation is inconvenient, and the image generation efficiency is low. In addition, the generated image result only depends on the input text, while the display effect of the image cannot be adjusted, resulting in that the setting of text to image generation is not flexible enough to meet the user's requirement for flexible adjustment of the image result. Therefore, how to reasonably schedule the text to image generation process to facilitate user operation, improve image generation efficiency, and flexibly adjust an effect of image generation becomes a technical problem to be solved urgently.

In view of the above, embodiments of the present disclosure provide a method for image generation and a related device. By presenting the text editing region, the style selection control, the condition setting control and the generated target image in the same image generation interface, the target prompt, the target style model and the target parameter generating the target image can be directly adjusted while the target image is presented without a need to jump between different interfaces. Therefore, the user operation is simplified, and the image generation efficiency is improved. In addition, the image effect can be flexibly set to meet the personalized requirement of the user on the image generation effect.

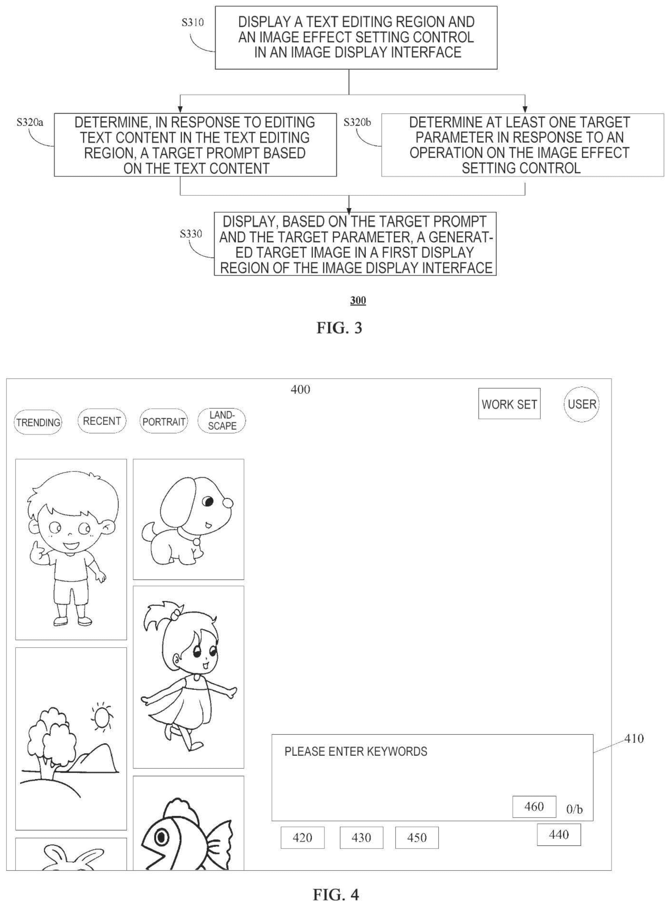

Referring to FIG. 3, FIG. 3 is a schematic flowchart of a method for image generation according to embodiments of the present disclosure. In FIG. 3, the method 300 for image generation may further include the following steps.

In step S310, a text editing region and an image effect setting control are displayed in the image display interface.

The image display interface may refer to an interface for displaying an image, including displaying an image generated by a current user, or displaying an image generated by other users, for example, obtaining an image posted by other users from a server side. In the image display interface, a text editing region may be displayed, a user may input text in the text editing region, obtain a target prompt based on the text, and to generate a target image. For example, the text may be a keyword, and the keyword may be directly used as the target prompt; the text may also be a text description, and the target prompt may be extracted from the text description. The image display interface may further display an image effect setting control, and the user may set the style of the target image by the image effect setting control, for example, the style of portrait, animation, general, and the like. The preset condition parameter of the target image may also be set by the image effect setting control, for example, a scale condition, a stylization degree condition, a fineness condition, and the like. Referring to FIG. 4, FIG. 4 is a schematic diagram of an image display interface according to embodiments of the present disclosure. In FIG. 4, the image display interface 400 includes a text editing region 410 and an image effect setting control 420.

In step S320a, a target prompt is determined based on the text content in response to editing the text content in the text editing region.

The text editing region 410 may be a text input box, and the user may input text content in the text editing region 410. The text content may be associated with an image the user wishes to generate, such as at least one keyword and/or at least one description. The text content may be in multiple languages.

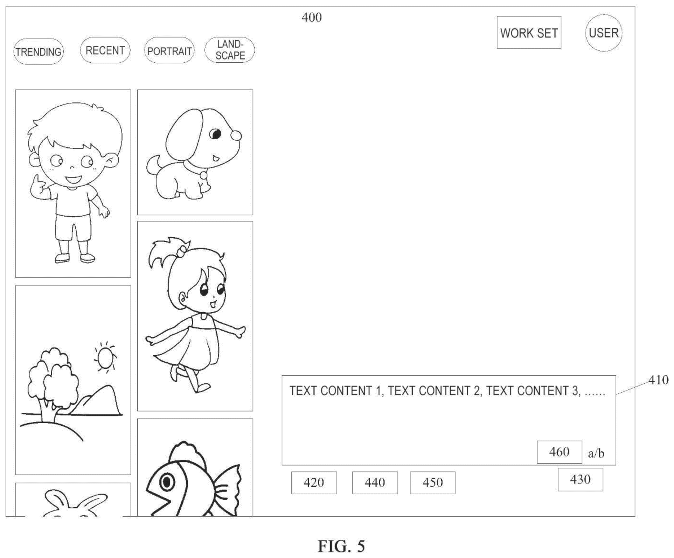

Specifically, when the text editing region 410 does not display the prompt, that is, the text editing region 410 is empty at this time, a prompt text for representing the function or effect of the text editing region 410 may be displayed in the text editing region 410 by using a preset color (for example, a gray color, or a color different from the background color of the text editing region), for example, "please input the keyword", "please input the effect copy to be generated" or "for example, high-definition, long hair, and woman", etc., as shown in FIG. 4. The user may trigger an operation O1 (for example, a click operation) on the text editing region 410, a cursor may be flashing in the text editing region 410, and input may be performed, for example, the text content 1, the text content 2, the text content 3, etc. As shown in FIG. 5, FIG. 5 illustrates a schematic diagram of an image display interface according to embodiments of the present disclosure. The text editing region 410 may also display the input character number "a" of the prompt and the maximum input character number "b". For example, "input character number/maximum input character number" may be used, and the input character number "a" may be updated in real time according to the number of characters actually displayed by the text editing region 410. When the text editing region 410 is empty, no prompt is input, and "0/b" may be displayed, as shown in FIG. 4. When the user inputs a number of a characters in the text editing region 410, "a/b" may be displayed, as shown in FIG. 5.

In step S320b, at least one target parameter is determined in response to an operation on the image effect setting control.

The image effect setting control may be configured to set a display effect of the target image, including setting a preset condition of a temporal sequence in a style model condition, a scale condition, a stylization degree condition and a fineness condition of the target image. The style model condition may refer to the style type of the target image, the scale condition may refer to the aspect scale of the target image, the stylization degree condition may refer to the degree to which the target image is stylized, and the fineness condition may refer to the resolution of the target image.

In some embodiments, determining the at least one target parameter in response to an operation on the image effect setting control includes: displaying, in response to a trigger operation on the image effect setting control, an image effect setting interface in an associated region of the image effect setting control, where the image effect setting interface includes at least one preset condition; and determining, in response to a selection operation for the preset condition, a selected condition parameter as the target parameter, where the image effect setting interface includes at least one of a style model condition, a scale condition, a stylization degree condition, and a fineness condition.

Each preset condition may include a plurality of corresponding condition parameters, the user may select a plurality of condition parameters for each preset condition, and the selected condition parameter may be used as the target parameter of the preset condition.

In some embodiments, the style model condition includes at least one preset style model parameter, and the target parameter includes a target style model; and determining, in response to a selection operation for the preset condition, the selected condition parameter as the target parameter, including: determining, in response to a selection operation for the preset style model, the selected preset style model as the target style model.

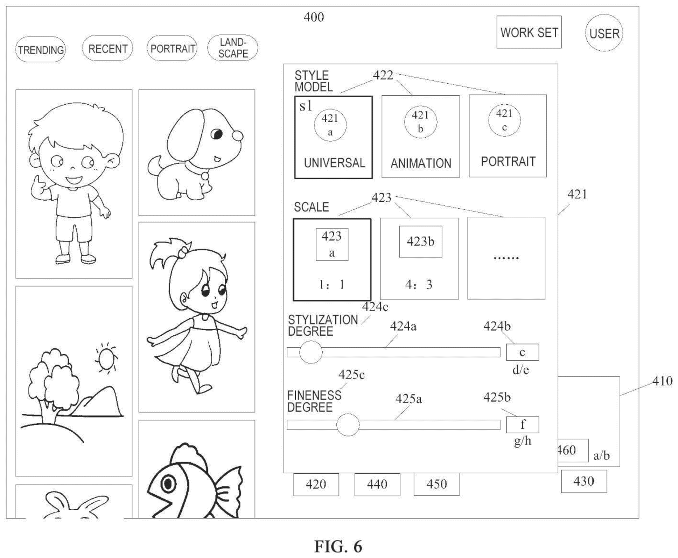

Specifically, the image display interface 400 in FIG. 4 may display an image effect setting control 420, and a setting identifier may be displayed on the image effect setting control 420 to indicate a function of the image effect setting control 420, for example, "parameter adjustment" or "parameter setting". The user may perform a trigger operation O2 (for example, a click operation) on the image effect setting control 420, and an image effect setting interface 421 may be displayed in an associated region of the image effect setting control 420 by using a pop-up window in response to the trigger operation O2, as shown in FIG. 6. FIG. 6 shows a schematic diagram of an image effect setting interface according to embodiments of the present disclosure.

In FIG. 6, a style label 422 of a plurality of style models is displayed in the image effect setting interface 421, each style label may display a style name and a corresponding icon, and each style label corresponds to one style model. For example, the style label s1 includes a style name "universal" and an icon 422a, and the style label s1 corresponds to a universal style model; the style label s2 includes a style name "animation" and an icon 422b, and the style label s2 corresponds to a animation style model; the style label s3 includes a style name "portrait" and an icon 422c, and the style label s3 corresponds to a portrait style model. The style model may be deployed at the server side, the user may select the style label to determine the target style model, for example, a preset label (for example, "√") may be set on the selected style label to indicate that the style label is selected, and the style model corresponding to the style label is the target style model. In some embodiments, the default value of the target style model corresponds to a universal style model. It should be understood that the above style labels and their corresponding style models are merely examples, and are not intended to be limiting, and more or fewer style labels and corresponding style models may be set as needed, which is not limited herein.

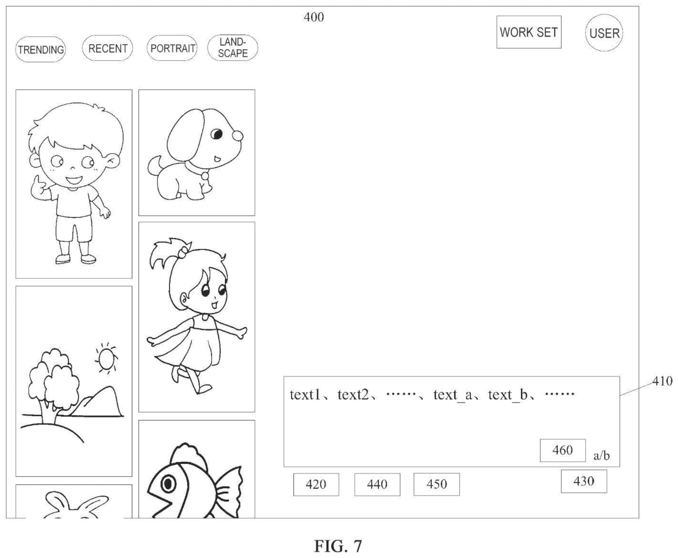

A plurality of scale labels 423 are also displayed in the image effect setting interface 421, as shown in FIG. 6. In FIG. 6, each scale label includes a scale parameter and a corresponding icon 423a, 423b, etc. The dimension scale may be consistent with the scale parameter, for example, 1:1, 3:4, 16:9, 4:3, 9:16, 2:3, 3:2, etc. The user may determine the target parameter of the scale condition by selecting the scale label 423, for example, the bounding box of the selected scale label may be thickened to indicate that the scale bounding box is selected, and the scale parameter displayed by the scale label is determined as the target parameter of the scale condition, such as the scale label of the scale 1: 1 in FIG. 7. In some embodiments, the default value of the scale condition may be 1: 1.

The image effect setting interface 421 in FIG. 6 further displays parameters of the stylization degree condition, which may be presented in the form of the first slider 424a and/or the first input box 424b. The user may drag the first slider 424a to determine the target parameter of the stylization degree, or may directly input the target parameter of the stylization degree in the first input box 424b. The first slider 424a may adjust the stylization degree of the first preset step number (for example, 30 steps), and the first input box 424b may input a value with a maximum character number of "e" (for example, e = 2). When the parameter value "c" of the stylization degree is input by using the first input box 424b, the character identifier "input character number/maximum character number" may also be displayed in the associated region of the first input box 424b, for example, "d/e", indicating that the input parameter value "c" includes "d" characters, and the maximum number of characters that the first input box 424b can input is "e". The number of input characters "d" may be updated with the number of characters input by the user. Correspondingly, the input character number "d" may also be consistent with the numerical value of the first slider 424a, and when the input character number d is updated, the numerical value of the first slider 424a is updated accordingly; when the numerical value of the first slider 424a is updated, the input character number d is also updated accordingly. In some embodiments, the default value of the stylization degree condition may be 30 steps. In some embodiments, when the number "d" of input characters in the first input box 424b of the stylization degree condition exceeds the maximum character number "e", prompt text, such as "input e characters at most", may be displayed. In some embodiments, the function identifier is displayed in the associated region of the name identifier 424c, to indicate a function of the stylization degree condition in response to a trigger operation on the name identifier 424c for the stylization degree condition (such as a hover operation on the name identifier 424c "stylization degree" in FIG. 6), for example, being popped up in the form of a text box.

The image effect setting interface 421 in FIG. 6 further displays parameters of a fineness condition, and may be presented in the form of a second slider 425a and/or a second input box 425b. The user may drag the second slider 425a to adjust the target parameter of the fineness condition, or may directly input the target parameter of the fineness in the second input box 425b. The second slider 425a may adjust the fineness of the second preset step number (for example, 50 steps), and the second input box 425b may input a value with a maximum character number of "h" (for example, h = 2). When the parameter value "f" of the fineness degree is input by using the second input box 425b, the character identifier "input character number/maximum character number" may also be displayed in the associated region of the second input box 425b, for example, "g/h", indicating that the input parameter value "f" includes "g" characters, and the maximum number of characters that the second input box 425b can input is "h". The number of input characters "g" may be updated with the number of characters input by the user. Correspondingly, the input character number "g" may also be consistent with the numerical value of the second slider 425a, and when the input character number "g" is updated, the numerical value of the second slider 425a is updated accordingly. When the numerical value of the second slider 425a is updated, the input character number "g" is also updated accordingly. In some embodiments, the default value of the fineness condition may be 30 steps. In some embodiments, when the number "g" of input characters in the second input box 425b of the fineness condition exceeds the maximum character number "h" , a prompt text, such as "input h characters at most", may be displayed. In some embodiments, the function identifier is displayed in the associated region of the name identifier 425c to indicate a function of the fineness condition in response to a trigger operation on the name identifier 425c for the fineness condition (e.g., a hover operation on the name identifier 425c "fineness" in FIG. 6), for example, being popped up in the form of a text box. A normal resolution may include the longest side of 768 pixels, and a super resolution may include "n" (e.g., n = 2) times of the normal resolution.

It should be understood, steps S320a and S320b may have a chronological order, or may not have a chronological order, which is not limited herein.

In step S330, a generated target image is displayed in a first display region of the image display interface based on the target prompt and the target parameter.

The first display region may refer to a region for displaying the target image in the image display interface. According to the determined target prompt, the image content of the target image can be determined, and the image effect of the target image can be determined according to the target parameter, so that the user can not only set the content of the target image, but also flexibly set the visual effect of the target image, the operation is simple and convenient, and the efficiency and effect of image generation are improved.

In some embodiments, a generation control, for example, the generation control 430 in FIG. 4, may be further displayed in the image display interface to trigger the generation and display of the target image.. The user may perform a trigger operation O3 (for example, a click operation) on the generation control 430, and the generation of the target image may be triggered. Specifically, a target image is generated based on the target prompt and the target parameter in response to the trigger operation O3, and the target image is displayed in the first display region, and the target image may be one or more images. It should be understood that one trigger operation of the user on the generation control 430 may be used as an input of the text editing region 410. That is, the text displayed in the text editing region 410, as a whole, is used as an input each time when the target image is generated. Further, in some embodiments, the target prompt displayed in the text editing region 410 is retained in response to a trigger operation of the user on the generation control 430.

In some embodiments, the generation control 430 may be in an available state or in an unavailable state. In some embodiments, the generation control displays an available state in response to detecting that a prompt is displayed in the text editing region. In this case, the generation control may be displayed in the first preset color. In some embodiments, the generation control is in an unavailable state in response to detecting that no prompt is displayed in the text editing region. Specifically, when there is no prompt in the text editing region 410, the generation control 430 is unavailable, and the user cannot operate on the generation control 430. In this case, the generation control may be displayed in a second preset color (for example, gray), to indicate an unavailable state of the generation control 430. Further, in some embodiments, the prompt text "Please input the keyword" is displayed in the associated region of the generation control 440 in response to detecting the trigger operation on the generation control 430 in the unavailable state, for example, the prompt text is popped up in a form of bubble box or dialogue box around the generation control 430.

In some embodiments, the method 300 may further include: displaying a random text control in the image display interface; inputting, in response to a trigger operation on the random text control, random text that is randomly generated in the text editing region, and determining a target style model of the target image based on a style corresponding to the random text.

Specifically, as shown in FIG. 7, FIG. 7 is a schematic diagram of an image display interface according to embodiments of the present disclosure. In FIG. 7, the random text control 440 is used to randomly generate text content and display the text content in the text editing region 410. The user may perform a trigger operation O4 (for example, a click operation) on the random text control 440, at least one random text is generated in response to the trigger operation O4 for the random text control 440, and the random text may be displayed in the text editing region 410, for example, the random texts text1, text2, etc. Further, the random prompt may have a corresponding style model. The prompt database may be set at the server side, the prompt database may include at least one prompt text, and each prompt text has a corresponding style. That is, when the prompt text word in the database is displayed in the text editing region 410, the style model condition in the image effect setting control 420 may be correspondingly set to the style model corresponding to the prompt text word in response to the trigger operation O4.

In some embodiments, the method 300 may further include: displaying an expanding text control in the image display interface; and supplementing, in response to a trigger operation for the expanding text control, new text content in the text editing region based on the text content in the text editing region.

Specifically, in FIG. 7, the expanding text control 450 is used to expand and display the text content in the text editing region 410. The user may perform a trigger operation O5 (for example, a click operation) on the expanding text control 450, and at least one extended text is generated based on the displayed text content in the current text edit region 410 in response to the trigger operation O5 on the expanding text control 450, where the expanded text and the real text content have similar or identical semantics. That is, the semantic similarity between the text content and the expanded text is greater than or equal to the similarity threshold. The expanded text may be displayed in the text editing region 410, such as expanded text text_a, text_b, ....

In some embodiments, the image display interface 400 may further display an update control 460 for updating the text content displayed in the text editing region. Specifically, as shown in FIG. 4, the user may perform a trigger operation O6 on the update control 460, and new text content is generated to replace the currently displayed text content in the prompt region in response to the trigger operation O6.

In some embodiments, displaying the generated target image in the first display region of the image display interface based on the target prompt and the target parameter includes: displaying an initial image in the first display region; generating the target image based on the target prompt and the target parameter; and displaying the target image in a region of the initial image.

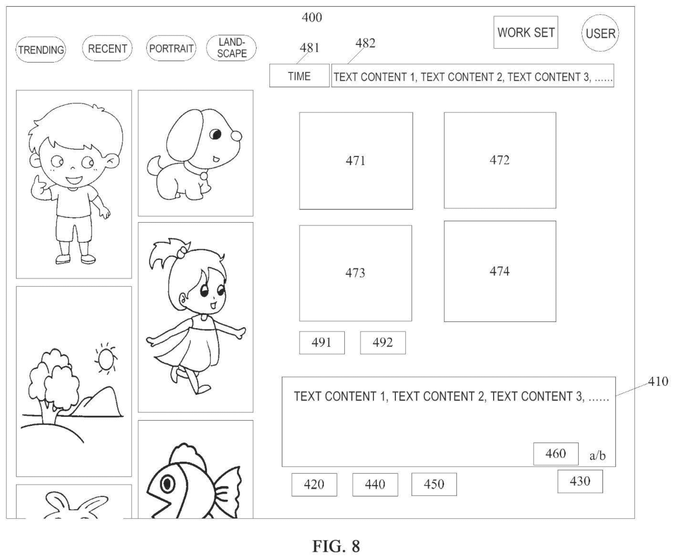

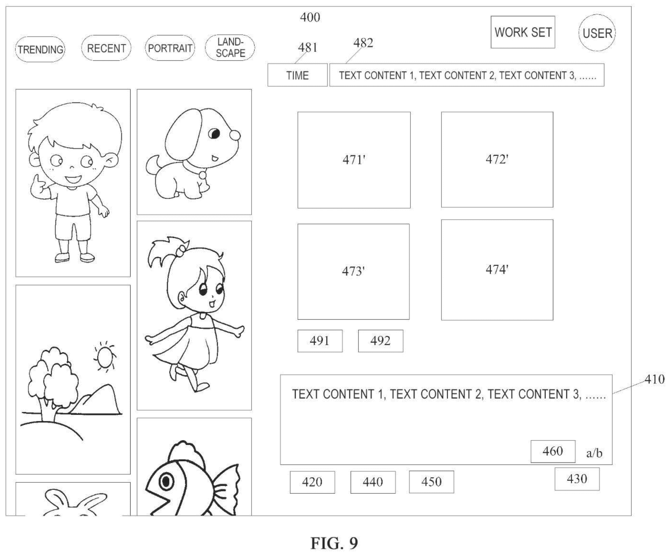

Specifically, the user may perform the trigger operation O3 on the generation control 430, the initial images 471-474 are displayed in the first display region in response to the trigger operation O3, as shown in FIG. 8, and FIG. 8 shows a schematic diagram of the first display region according to embodiments of the present disclosure. While displaying the initial images 471-474, the server side may generate the target images based on the target prompt and the target parameter. Since the target image generation requires a certain time duration, the initial image may be displayed in the first display region for arranging the position of the target image, and once the target images 471'-474' are generated, the target images 471'-474' may be displayed in the region of the initial images 471-474. That is, the initial images 471-474 are replaced with the target images 471'-474', as shown in FIG. 9, FIG. 9 shows a schematic diagram of the first display region according to embodiments of the present disclosure.

In some embodiments, displaying the target image in the region of the initial image includes: displaying, in the first display region, an animation for transitioning the initial image to the target image.

In order to avoid the experience drop caused by waiting of the user, the process of transitioning the initial images 471 -474 to the target images 471'-474' may be displayed as an animation to improve the interestingness in the image generation process and increase the user experience. For example, the animation may be obtained based on a transition in optical flow information between the initial image and the target image. In another example, a blurred (low resolution) initial image is transitioned to a clear (high resolution) target image. In another example, the initial image may be a noise point image, and the animation may be a transition process of generating the target image by using a noise point image based on the diffusion model.

In some embodiments, displaying the initial image in the first display region includes: generating the initial image based on the semantic information of the target prompt, or searching in an image database based on the target prompt to obtain a preset number of the initial images matching the semantic or style of the target prompt; and determining the preset number of regions in the first display region to display the initial image.

The initial image may be an image, having a similar or the same semantic/style as the target image, obtained by quick generation or quick search based on the semantic information of the target prompt. In this way, not only the generation process of the target image can be enriched visually, but also the position of the target image can be arranged in the first display region, so that the target image can be displayed at the position after the target image is generated, and the image generation and display efficiency is further improved. In some embodiments, the preset number may be 4, as shown in FIG. 8. It should be understood that the preset quantity may also be other values, which is not limited herein.

In some embodiments, the method 300 may further include: displaying at least one of the following in association with the target image in the first display region: a trigger time for generating the target image, the text content, the target parameter, a re-editing control, or a regeneration control.

Specifically, as shown in FIG. 7 to FIG. 8, one of the following may be displayed in association with the initial images 471-474 or the target images 471'-474' in the first display region: the trigger time 481, the text content 482, the re-editing control 491, or the re-generation control 492 of the target image.

In some embodiments, the method 300 may further include: displaying, in response to a trigger operation on the re-editing control, the text content in the text editing region, and setting the image effect setting control to the target parameter.

Specifically, as shown in FIG. 8, the user may perform the trigger operation O9_1 on the re-editing control 491, and in response to the trigger operation O9_1, the text content "text content 1, the text content 2, the text content 3, etc." may be displayed in the text editing region, and the image effect setting control 420 is set with the target parameter. In this way, when the user wants to adjust some preset conditions or all preset conditions of the current target images 471'-474', adjustment may be performed on the basis of generating the current target images 471'-474', which does not need to be reset, further improving the efficiency and effect of image generation, and is more flexible to operate.

In some embodiments, the method 300 may further include: displaying, in response to a trigger operation on the re-generation control, a new target image generated based on the target prompt and the target parameter in the first display region; and displaying, in association with the new target image in the first display region, at least one of: a trigger time, the text content, the target parameter, a re-editing control, or a re-generation control corresponding to the new target image.

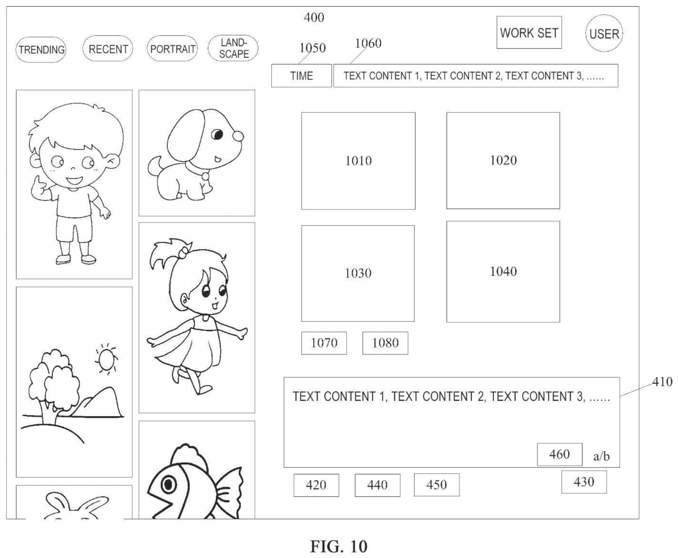

Specifically, as shown in FIG. 8, when the user is not satisfied with the current target images 471'-474', and it is desired to regenerate the target image with the current text content and the target parameter, a trigger operation O9_2 may be performed on the re-generation control 492. The server obtains new target images 1010-1040 generated based on the target prompt and the target parameter in the current text content in response to the trigger operation O9_2, as shown in FIG. 10. The new target images 1010-1040 may be displayed in the first display region, for example, the new target images 1010-1040 may be displayed below or above the target images 471'-474'. Further, at least one of the trigger time 1050, the text content 1060, the re-editing control 1070, or the re-generation control 1080 of the new target image may be displayed in association with the new target images 1010-1040 in the first display region. It should be understood that function of the re-editing control 1070 or the re-generating control 1080 is similar to the function of the re-editing control 491 or the re-generating control 492, and details are not described herein again.

In some embodiments, the method 300 may further include: displaying, in response to a trigger operation for the target image, a super-resolution image corresponding to the target image in the first display region; and displaying, in association with the super-resolution image in the first display region, at least one of a trigger time, the text content, the target parameter, a re-editing control, or a re-generation control corresponding to the super-resolution image.

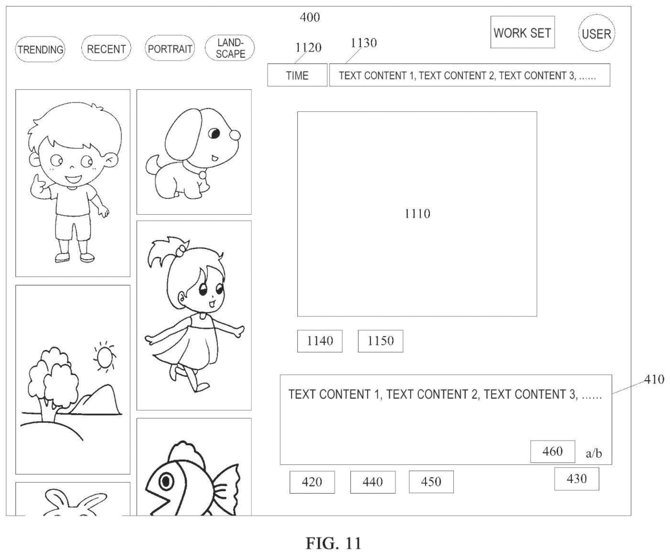

Specifically, the user may trigger operation O11 for any one of the current target images 471'-474', the super-resolution image 1110 of the selected current target image may be displayed in the first display region in response to the trigger operation O11, as shown in FIG. 11, FIG. 11 shows a schematic diagram of the super-resolution image according to embodiments of the present disclosure. For example, a trigger operation O11 (for example, a click operation) may be performed on the current target image 471' in FIG. 9, and the super-resolution image 1110 of the target image 471' may be displayed in the first display region in response to the trigger operation O11. A resolution of the super-resolution image 1110 may be "m" (m is a positive integer greater than or equal to 2) times of the target image 471'. At least one of the trigger time 1120, the text content 1130, the re-editing control 1140, or the re-generation control 1150 corresponding to the super-resolution image may also be displayed in association with the super-resolution image 1110 in the first display region. It should be understood that function of the re-editing control 1140 or the re-generation control 1150 is similar to function of the re-editing control 491 or the re-generation control 492, and details are not described herein again.

In some embodiments, the method 300 may further include: displaying a work set control in the image display interface; displaying a work set interface in the first display region in response to a trigger operation on the work set control, where the work set interface includes a thumbnail corresponding to the super-resolution image; and a dimension scale of the thumbnail is consistent with the dimension scale of the super-resolution image.

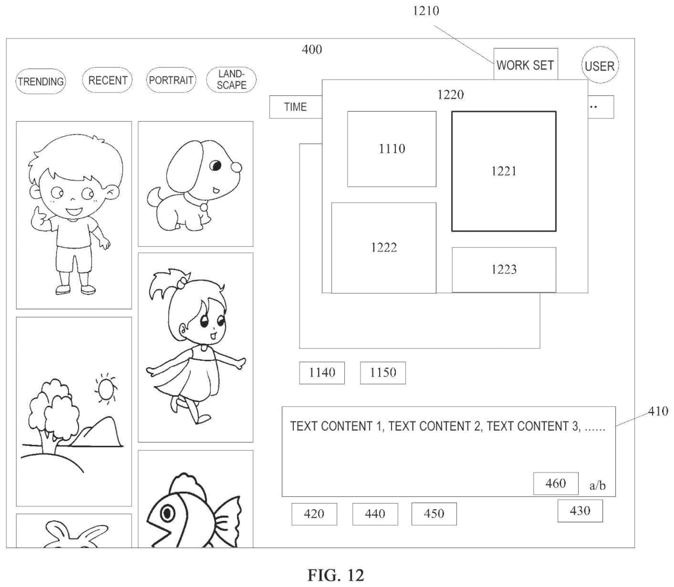

Specifically, referring to FIG. 12, FIG. 12 is a schematic diagram of a work set interface according to embodiments of the present disclosure. In FIG. 12, a work set control 1210 is used to display a set of generated super-resolution images. The user may perform a trigger operation O12 (for example, a click operation) on the work set control 1210, and the work set interface 1220 is displayed in the associated region of the work set control 1210 in response to the trigger operation O12. The thumbnails in the work set interface 1220 are ordered according to the trigger times of the corresponding super-resolution image, for example, the thumbnail of the super-resolution image 1110 with the closest trigger time is in the first position, the super-resolution images corresponding to other thumbnails 1221-1223 are all historically generated super-resolution images, and the trigger times are sequentially from near to far. The dimension scale of the thumbnail is consistent with the dimension scale of the corresponding super-resolution image, and the image effect of the generated target image can be truly reflected.

In some embodiments, the method 300 may further include: popping up an image information interface in the image display interface in response to a trigger operation for the thumbnail, where the image information interface includes at least one of the following: a super-resolution image corresponding to the thumbnail, text content corresponding to the super-resolution image, a target parameter corresponding to the super-resolution image, a same-template production control, a post control, and a close control.

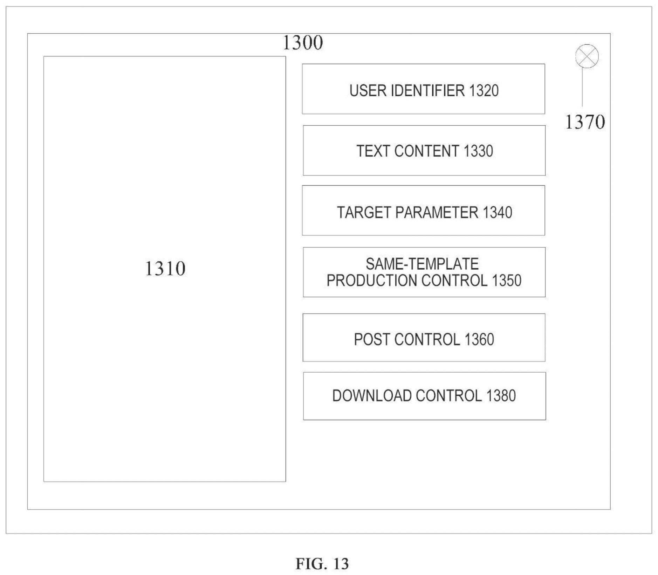

Specifically, referring to FIG. 12 to FIG. 13, the user may perform a trigger operation (for example, a click operation) on the thumbnail 1221 in FIG. 12, and the image information interface 1300 may be popped up in the image display interface 400 in response to the trigger operation on the thumbnail 1221, as shown in FIG. 13, and FIG. 13 shows a schematic diagram of an image information interface according to embodiments of the present disclosure. In the image information interface 1300, the following may be displayed: a super-resolution image 1310 corresponding to the thumbnail 1221, a user identifier 1320 corresponding to the super-resolution image, a text content 1330 corresponding to the super-resolution image, a target parameter 1340 corresponding to the super-resolution image, a same-template production control 1350, a post control 1360, a close control 1370, and a download control 1380.

In some embodiments, the method 300 may further include: jumping to the image display interface in response to a trigger operation on the same-template production control, and displaying the text content corresponding to the super-resolution image in the text editing region, and setting the image effect setting control to the target parameter.

Specifically, the user may perform a trigger operation (for example, a click operation) on the same-template production control 1350 in FIG. 13, and the image display interface 400 shown in FIG. 12 may be jumped to in response to the trigger operation. The text content corresponding to the super-resolution image may be displayed in the text editing region 410, and the image effect setting control 420 may be set to the target parameter corresponding to the super-resolution image.

In some embodiments, the method 300 may further include: posting the super-resolution image in response to a triggering operation on the post control.

Specifically, the user may perform a trigger operation (for example, a click operation) on the post control 1360 in FIG. 13, and the super-resolution image 1310 may be posted in response to the operation. Further, a prompt text, such as "success", may be displayed in the image information interface 1300 in response to the super-resolution image 1310 being successfully posted. A prompt text, such as "failed to post", may be displayed in the image information interface 1300 in response to the super-resolution image 1310 being posted unsuccessfully.

In some embodiments, the method 300 may further include: closing the image information interface and locating a position of the thumbnail in the work set interface in response to a trigger operation on the close control.

Specifically, the user may perform a trigger operation (for example, a click operation) on the close control 1370 in FIG. 13, and the image display interface 400 shown in FIG. 12 may be jumped to in response to the trigger operation, and the position is located in the position of the thumbnail 1221 in the work set interface 1220.

In some embodiments, the method 300 may further include: downloading the super-resolution image in response to a trigger operation on the download control.

Specifically, the user may trigger an operation (for example, a click operation) on the download control 1380 in FIG. 13, and the super-resolution image 1310 may be downloaded in response to the operation. Further, a prompt text, such as "download successfully", may be displayed in the image information interface 1300 in response to the super-resolution image 1310 being successfully downloaded. A prompt text, such as "failed to download", may be displayed in the image information interface 1300 in response to the super-resolution image 1310 being downloaded unsuccessfully.

In some embodiments, the method 300 may further include: displaying, in the first display region, a historical image presented in the first display region; and displaying, in response to a swiping operation in the first display region, the historical image in temporal sequence in the first display region.

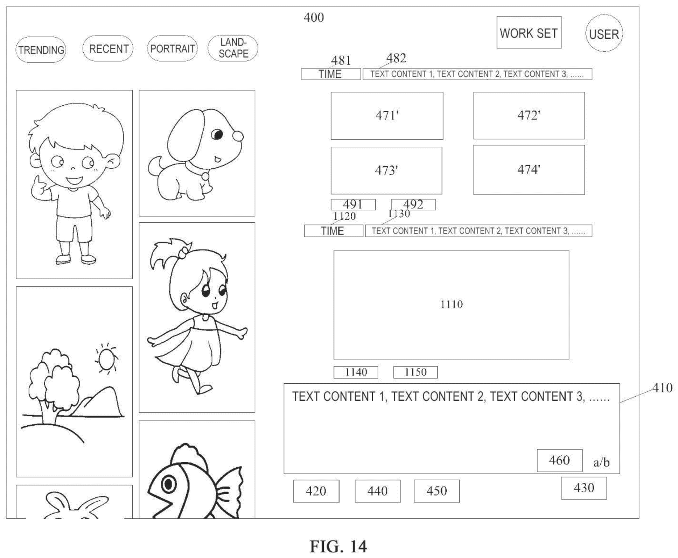

Specifically, referring to FIG. 14, which is a schematic diagram of a historical image according to embodiments of the present disclosure. The historical image 471'-474' and the historical image 1110 may be displayed in the first display region in FIG. 14. The historical images may be displayed in temporal sequence, and the user may perform a swiping operation in the first display region, and may browse the historical images.

In some embodiments, the method 300 may further include: displaying at least one type label in a second display region of the image display interface; and displaying, in response to a selection of the type label, a presentation image pertaining to an image type corresponding to the selected type label in the second display region.

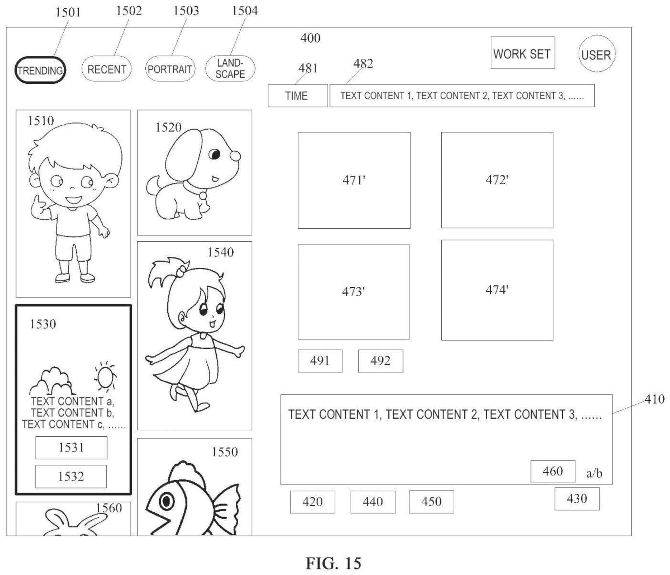

Specifically, referring to FIG. 15, the presentation images 1510-1560 may be displayed in the second display region of the image display interface 100, which may be obtained by screening out images posted by the current user and/or other users. All the images posted by the users may be obtained from the server, and when any one of the type labels 1501-1504 is selected by the user, the server side may select the posted images pertaining to the type label in the user's posted image, and then deliver them to the image display interface 100, rank and present them to the user according to a preset rule. The user may browse the presentation images through a swiping operation in the second display region, from which the presentation image of interest is selected for reference.

In some embodiments, displaying a presentation image pertaining to the image type corresponding to the selected type label in the second display region includes: scoring user posted images pertaining to the selected image type based on image qualities and user behavior data to obtain comprehensive scores; determining the user posted images with the comprehensive scores greater than or equal to a score threshold as the presentation images; and ranking in accordance with the comprehensive scores or posted times, and displaying the presentation images in the second display region.

The image quality may refer to image definition, color saturation, and the like, and the image effect of the posted images can be evaluated from the customer parameters. The user behavior data may refer to operations such as liking, favoriting, forwarding, downloading and the like of the user on the posted image, indicating the degree of interest of the user on the posted images, and reflecting the popularity of the posted images from the perspective of the user. Weighting the scores based on the image qualities and the user behavior data may lead to comprehensive scores of the posted images, and higher comprehensive scores indicate better image effect of the posted images. The posted images with the comprehensive scores higher than the score threshold can be selected for presentation, which can provide a good image data foundation for the user, and help the user to reference the presentation image to generate the target image with better effect. The presentation images may be ranked and presented in descending order of comprehensive scores, and the larger the comprehensive score is, the higher the ranking is. The presentation image may also be ranked and presented in the descending order from near to far according to the posted times, and the closer the posted time is, the higher the ranking is.

In some embodiments, the method 300 may further include: displaying, in response to a trigger operation on the presentation image, text content, a same-template production control, or an information control corresponding to the presentation image in an associated region of the presentation image; displaying, in response to a trigger operation on the same-template production control, the text content corresponding to the presentation image in the text editing region, and setting the image effect setting control with a target parameter corresponding to the presentation image.

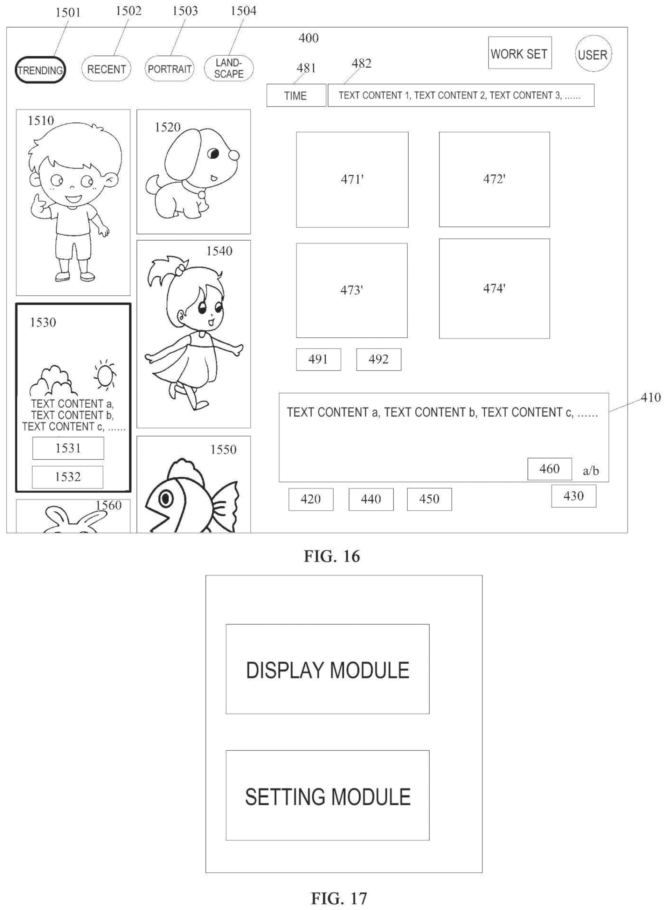

Specifically, referring to FIG. 15, which is a schematic diagram of a presentation image according to embodiments of the present disclosure. In FIG. 15, the user may perform a trigger operation (for example, a click operation) on the presentation image 1530, and the text content, the same-template production control, or the information control corresponding to the presentation image may be displayed in the form of an overlay in the associated region of the presentation image 1530. The overlay may have transparency, and the content of the presentation image 1530 can be seen through the overlay while displaying the text content "text content a, text content b, text content c, etc.", the same-template production control 1531, or the information control 1532. The user may trigger an operation on the same-template production control 1531, and the text content "text content a, text content b, text content c," corresponding to the presentation image 1530 may be displayed in the text editing region 410 in response to the trigger operation, as shown in FIG. 16, and FIG. 16 shows a schematic diagram of presentation images according to embodiments of the present disclosure.

In some embodiments, the method 300 may further include: displaying, in response to a trigger operation on the information control, a presentation information interface in an associated region of the presentation image, where the presentation information interface includes at least one of: a user identifier of the presentation image, the text content corresponding to the presentation image, the target parameter or a posted time corresponding to the presentation image.

Specifically, in response to a trigger operation on the information control 1532 in FIG. 16, a presentation information interface may be displayed in the associated region of the presentation image, where the presentation information interface includes at least one of: a user identifier of the presentation image 1530, the text content corresponding to the presentation image, the target parameter or the posted time corresponding to the presentation image.

In some embodiments, the method 300 may further include: displaying, in response to detecting that the historical target image does not exist, in the image display interface, guidance content related to the target image display, where the guidance content includes at least one of: video data, picture data, dynamic picture data, or text description.

Specifically, whether the user uses for the first time may be determined by detecting whether the historical target image exists, if the historical target image does not exist, then the user may use for the first time, the guide content may be displayed in the image display interface, and the user may be guided to generate the target image. The guide content may guide the user through one or more steps in the video data, the picture data, the dynamic image data, the text description, and the like, to help the user to quickly generate the target image in a diversified form, and to further improve the image generation efficiency. In some embodiments, the user may choose to skip the guide content.

It should be noted that the method in the embodiments of the present disclosure may be performed by a single device, for example, a computer or a server. The method in this embodiment may also be applied to a distributed scenario, and completed by cooperation of a plurality of devices. In this distributed scenario, one of the plurality of devices may perform only one or more steps in the method in the embodiments of the present disclosure, and the plurality of devices interact with each other to complete the method.

It should be noted that some embodiments of the present disclosure are described above. Other embodiments are within the scope of the appended claims. In some cases, the actions or steps recited in the claims may be performed in a different order than in the above embodiments and still achieve the desired results. Additionally, the processes depicted in the accompanying drawings do not necessarily require a particular order or sequential order shown to achieve the desired results. In certain embodiments, multitasking and parallel processing are also possible or may be advantageous.

Based on the same technical concept, corresponding to the foregoing embodiment method, the present disclosure further provides an apparatus for image generation. Referring to FIG. 17, the apparatus for image generation includes: a display module configured to display a text editing region and an image effect setting control in an image display interface; a setting module configured to determine, in response to editing text content in the text editing region, a target prompt based on the text content; and determine at least one target parameter in response to an operation on the image effect setting control, the display module is further configured to display, based on the target prompt and the target parameter, a generated target image in a first display region of the image display interface.

For convenience of description, the above apparatus is divided into various modules, which are to be described separately when the above apparatus is described. Of course, the functions of the modules may be implemented in one or more software and/or hardware when implementing the present disclosure.

The apparatus of the foregoing embodiment is used to implement the corresponding method for image generation in any of the foregoing embodiments, and has the beneficial effects of the corresponding method embodiments, and details are not described herein again.

Based on the same technical concept, corresponding to any of the above embodiments, the present disclosure further provides a non-transitory computer-readable storage medium storing computer instructions for causing the computer to perform the method for image generation according to any one of the above embodiments.

Computer-readable media of the present embodiments include permanent and non-permanent, removable and non-removable media that can implement information storage by any method or technology. The information may be computer readable instructions, data structures, modules of a program, or other data. Examples of computer storage medium include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read-only memory (CD-ROM), digital versatile disc (DVD) or other optical storage, magnetic cassettes, magnetic tape magnetic disk storage or other magnetic storage devices, or any other non-transmission medium, which can be used to store information that can be accessed by a computing device.

The computer instructions stored in the storage medium in the foregoing embodiments are used to cause the computer to perform the method for image generation according to any one of the foregoing embodiments, and have the beneficial effects of the corresponding method embodiments, and details are not described herein again.

It should be understood by those of ordinary skill in the art that the discussion of any of the above embodiments is merely illustrative and is not intended to suggest that the scope of the present disclosure, including the claims, is limited to these examples; in the spirit of the present disclosure, the above embodiments or the technical features in different embodiments may also be combined, the steps may be implemented in any order, and there are many other variations of the different aspects of the embodiments of the present disclosure as described above, which are not provided in detail for the sake of brevity.

Additionally, for simplicity of illustration and discussion, and to not obscure embodiments of the present disclosure, well-known power supply/ground connections to integrated circuit (IC) chips and other components may or may not be shown in the provided accompanying drawings. Moreover, the apparatus may be shown in the form of block diagram in order to avoid obscuring the embodiments of the present disclosure, and this also takes into account the fact that the details regarding the implementation of these block diagram apparatus highly depend on the platform in which the embodiments of the present disclosure are to be implemented (i.e., these details should be fully within the understanding of those skilled in the art). Having set forth specific details (e.g., circuits) to describe example embodiments of the present disclosure, it will be apparent to those skilled in the art that embodiments of the present disclosure may be practiced without these specific details or with changes to these specific details. Accordingly, these descriptions should be considered illustrative and not limiting.

Although the present disclosure has been described in conjunction with specific embodiments of the present disclosure, many alternatives, modifications, and variations of these embodiments will be apparent to those of ordinary skill in the art according to the foregoing description. For example, other memory architectures (e.g., dynamic RAM (DRAM)) may use the discussed embodiments.

The embodiments of the present disclosure are intended to cover all such alternatives, modifications and variations that fall within the broad scope of the appended claims. Therefore, any omission, modification, equivalent replacement, improvement and the like that are made within the spirit and principle of the embodiments of the present disclosure should be included within the protection scope of the present disclosure.

## Claims

1. A method for image generation, wherein the method comprises:
displaying a text editing region and an image effect setting control in an image display interface;
determining, in response to editing text content in the text editing region, a target prompt based on the text content;
determining at least one target parameter in response to an operation on the image effect setting control;
displaying, based on the target prompt and the target parameter, a generated target image in a first display region of the image display interface.

2. The method of claim 1, wherein determining the at least one target parameter in response to the operation on the image effect setting control comprises:
displaying, in response to a trigger operation on the image effect setting control, an image effect setting interface in an associated region of the image effect setting control, wherein the image effect setting interface comprises at least one preset condition;
determining, in response to a selection operation for the preset condition, a selected condition parameter as the target parameter, wherein the image effect setting interface comprises at least one of a style model condition, a scale condition, a stylization degree condition, and a fineness condition.

3. The method of claim 2, wherein the style model condition comprises at least one preset style model parameter, and the target parameter comprises a target style model;
determining, in response to the selection operation for the preset condition, the selected condition parameter as the target parameter comprising:
determining, in response to a selection operation for the preset style model, the selected preset style model as the target style model.

4. The method of claim 1, wherein displaying the generated target image in the first display region of the image display interface based on the target prompt and the target parameter comprises:
displaying an initial image in the first display region;
generating the target image based on the target prompt and the target parameter;
displaying the target image in a region for the initial image.

5. The method of claim 4, wherein displaying the initial image in the first display region comprises:
generating the initial image based on semantic information of the target prompt, or searching in an image database based on the target prompt to obtain a preset number of the initial images matching semantics of the target prompt;
determining the preset number of regions in the first display region to display the initial image.

6. The method of claim 4, wherein displaying the target image in the region for the initial image comprises:
displaying, in the first display region, an animation for transitioning the initial image to the target image.

7. The method of claim 1, further comprising:
displaying, in association with the target image in the first display region, at least one of the following: a trigger time for generating the target image, the text content, the target parameter, a re-editing control, or a re-generation control.

8. The method of claim 7, further comprising:
displaying, in response to a trigger operation on the re-editing control, the text content in the text editing region, and setting the image effect setting control to the target parameter; or
displaying, in response to a trigger operation on the re-generation control, a new target image generated based on the target prompt and the target parameter in the first display region; and displaying, in association with the new target image in the first display region, at least one of a trigger time, the text content, the target parameter, a re-editing control, or a re-generation control corresponding to the new target image.

9. The method of claim 1, further comprising:
displaying, in response to a trigger operation on the target image, a super-resolution image corresponding to the target image in the first display region; and displaying, in association with the super-resolution image in the first display region, at least one of a trigger time, the text content, the target parameter, a re-editing control, or a re-generation control corresponding to the super-resolution image.

10. The method of claim 9, further comprising:
displaying a work set control in the image display interface;
displaying, in response to a trigger operation on the work set control, a work set in the first display region, wherein the work set interface comprises a thumbnail corresponding to the super-resolution image; and a dimension scale of the thumbnail is consistent with the dimension scale of the super-resolution image.

11. The method of claim 10, further comprising:
popping up an image information interface in the image display interface in response to a trigger operation on the thumbnail, wherein the image information interface comprises at least one of the following: the super-resolution image corresponding to the thumbnail, text content corresponding to the super-resolution image, a target parameter corresponding to the super-resolution image, a same-template production control, a post control, a close control.

12. The method of claim 11, further comprising:
jumping to the image display interface in response to a trigger operation on the same-template production control, and displaying the text content corresponding to the super-resolution image in the text editing region, and setting the image effect setting control to the target parameter; or
posting the super-resolution image in response to a trigger operation on a post control; or
closing the image information interface and locating a position of the thumbnail in the work set interface in response to a trigger operation on the close control.

13. The method of claim 1, further comprising:
displaying, in the first display region, a historical image presented in the first display region;
displaying, in response to a swiping operation in the first display region, the historical image in temporal sequence in the first display region.

14. The method of claim 1, further comprising:
displaying a random text control in the image display interface;
inputting, in response to a trigger operation for the random text control, random text that is randomly generated in the text editing region, and determining a target style model of the target image based on a style corresponding to the random text; or
displaying an expanding text control in the image display interface;
supplementing, in response to a trigger operation on the expanding text control, new text content in the text editing region based on the text content in the text editing region.

15. The method of claim 1, further comprising:
displaying at least one type label in a second display region of the image display interface;
displaying, in response to a selection of the type label, a presentation image pertaining to an image type corresponding to the selected type label in the second display region.

16. The method of claim 15, further comprising:
displaying, in response to a trigger operation on the presentation image, text content, a same-template production control or an information control corresponding to the presentation image in an associated region of the presentation image;
displaying, in response to a trigger operation on the same-template production control, the text content corresponding to the presentation image in the text editing region, and setting the image effect setting control to a target parameter corresponding to the presentation image; or
displaying, in response to a trigger operation on the information control, a presentation information interface in the associated region of the presentation image, wherein the presentation information interface comprises at least one of a user identifier of the presentation image, the text content corresponding to the presentation image, the target parameter or a posted time corresponding to the presentation image.

17. The method of claim 14, wherein displaying the presentation images pertaining to the image type corresponding to the selected type label in the second display region comprises:
scoring user posted images pertaining to the selected image type based on image qualities and user behavior data to obtain comprehensive scores;
determining the user posted images with the comprehensive scores greater than or equal to a score threshold as the presentation images;
ranking in accordance with the comprehensive scores or posted times, and displaying the presentation images in the second display region.

18. An apparatus for image generation, comprising:
a display module configured to display a text editing region and an image effect setting control in an image display interface;
a setting module configured to determine, in response to editing text content in the text editing region, a target prompt based on the text content; and determine at least one target parameter in response to an operation on the image effect setting control;
wherein the display module is further configured to display, based on the target prompt and the target parameter, a generated target image in a first display region of the image display interface.

19. An electronic device, comprising a memory, a processor, and a computer program stored in the memory and executable on the processor, wherein the processor executes the program to implement the method of any one of claims 1 to 17.

20. A non-transitory computer-readable storage medium storing computer instructions for causing a computer to perform the method of any one of claims 1 to 17.

21. A computer program product tangibly stored in a computer storage medium and comprising computer-executable instructions, wherein the computer-executable instructions, when executed by a device, cause the device to perform the method of any one of claim 1-17.
